# FASCICULE DE BREVET EUROPEEN

(11) **EP 3 314 735 B1**
(45) Date de publication et mention de la délivrance du brevet: **27.05.2020**
(21) Numéro de dépôt: 16729544.3
(22) Date de dépôt: 10.06.2016
(51) Int. Cl.: F04D 25/06, H02K 3/24, H02K 9/22, H02K 1/18, H02K 11/01, H02K 11/22, H02K 21/22

(54) **MOTEUR ELECTRIQUE D'UN DISPOSITIF DE PULSION D'AIR ET DISPOSITIF DE PULSION D'AIR**
ELEKTROMOTOR EINER LÜFTERVORRICHTUNG UND LÜFTERVORRICHTUNG
ELECTRIC MOTOR OF A BLOWER DEVICE AND BLOWER DEVICE

(30) Priorité: 29.06.2015 FR 1556013
(43) Date de publication de la demande: 02.05.2018
(73) Titulaire: Valeo Systemes Thermiques, 78320 Le Mesnil Saint Denis (FR)
(72) Inventeur: CAPOULUN, Geoffroy, 78322 Le Mesnil Saint-Denis Cedex (FR); GUIGOU, Pascal, 78322 Le Mesnil Saint-Denis Cedex (FR)
(74) Mandataire: Tran, Chi-Hai
(86) Numéro de dépôt international: PCT/EP2016/063352
(87) Numéro de publication internationale: WO 2017/001171

(56) Documents cités:
- DE-A1- 3 144 629
- US-A- 4 647 803
- US-A- 5 319 270
- US-B1- 7 113 365

## Description

### Domaine Technique de l'invention

La présente invention concerne le domaine des moteurs électriques notamment ceux utilisés pour les dispositifs de pulsion d'air d'une installation de chauffage, de ventilation et/ou de climatisation pour véhicule automobile (également désignée sous l'acronyme « HVAC », ceci correspondant à « Heating, Ventilation and/or Air-Condtioning device » en langue anglaise).

### Etat de la technique antérieur

Un véhicule automobile est couramment équipé d'un dispositif de ventilation, de chauffage et/ou de climatisation pour réguler la température d'un flux d'air distribué vers l'intérieur de l'habitacle du véhicule. Le dispositif comprend généralement un boîtier délimité par des cloisons dans lesquelles sont ménagées des ouvertures, dont au moins une entrée d'air et au moins une sortie d'air.

De façon connue, le boîtier loge un dispositif de pulsion d'air ou pulseur, pour faire circuler le flux d'air depuis l'entrée d'air vers la sortie d'air. Le boîtier loge aussi des moyens de traitement thermique pour réchauffer et/ou refroidir le flux d'air préalablement à sa distribution à l'intérieur de l'habitacle.

Les pulseurs comportent généralement des moteurs électriques à commutation électronique, ou moteurs à courant continu sans balai (connu également sous la dénomination anglaise de « brushless »). Ces moteurs comportent un ensemble rotor et stator, chacun de ces composants étant porteur d'éléments électromagnétiques dont l'interaction génère le déplacement du rotor relativement au stator. Le rotor et le stator sont montés indépendamment l'un de l'autre dans ledit moteur, et il convient de s'assurer que le positionnement relatif de ces deux composants est correct pour un fonctionnement optimal du moteur.

Par ailleurs, un problème présent avec ce type de moteur est, lors d'une utilisation, des rayonnements électromagnétiques sont générés, or ces derniers peuvent perturber le fonctionnement d'autres appareils électroniques disposés à proximité dudit moteur.

La demande de brevet DE3144629 décrit un moteur électrique pour un dispositif de pulsion d'air avec un rotor disposé d'un stator et porté au moins un aimant permanent et un support du rotor et du stator qui est apte à dissiper la chaleur.

### Exposé de l'invention

La présente invention vise à remédier au moins partiellement aux inconvénients précités et à proposer un moteur électrique et un dispositif de pulsion d'air associé permettant notamment de limiter la propagation des rayonnements électromagnétiques à l'extérieur dudit moteur.

Pour cela, l'invention propose selon la revendication indépendante 1 un moteur électrique pour dispositif de pulsion d'air, comprenant un rotor, un stator, un support dudit rotor et dudit stator apte à dissiper la chaleur et une carte électronique de commande est disposée sur la face d'une platine du support à l'opposé d'un cylindre du support doté d'un canal interne débouchant sensiblement au centre de la platine et faisant office du support du rotor et du stator, le moteur électrique comportant un capot de blindage agencé entre le rotor et le stator correspondant à une feuille de métal et présentant une forme annulaire et le capot de blindage est relié au support dudit rotor et dudit stator par un moyen de fixation.

De cette manière, il est possible de positionner aisément un capot de blindage qui limite la propagation des rayonnements électromagnétiques générés par les bobines du stator. Plus particulièrement, ledit capot de blindage est ainsi agencé à proximité immédiate du stator permettant ainsi un meilleur confinement des rayonnements électromagnétiques.

Des modes de réalisations particuliers selon l'invention proposent que :
- le moyen de fixation comprend une première partie disposée sur le capot de blindage et une deuxième partie disposée sur le support ; ainsi le moyen de fixation permettant de fixer le capot de blindage au support desdits rotor et stator sont distribués sur chacun desdits éléments ;
- les première et deuxième parties dudit moyen de fixation sont intégrées respectivement dans ledit capot de blindage et ledit support. En d'autres termes, chacune des parties dudit moyen de fixation est mise en forme directement dans le capot de blindage ou le support desdits rotor et stator. Autrement dit, la première partie du moyen de fixation forme une pièce monobloc avec le capot de blindage et la deuxième partie dudit moyen de fixation forme une pièce monobloc avec ledit support. Ceci évite ainsi d'avoir des pièces supplémentaires intermédiaires, par exemple un boulon, pour fixer le capot de blindage au support desdits rotor et stator ;
- le support dudit rotor et dudit stator et le capot de blindage sont reliés électriquement ; cette caractéristique permet d'améliorer l'efficacité dudit capot de blindage à limiter la propagation des rayonnements électromagnétiques hors du moteur électrique ;
- le moyen de fixation comprend au moins un plot agencé sur le support dudit rotor et dudit stator et au moins une ouverture, apte à accueillir ledit plot, agencée sur le capot de blindage ;
- le support dudit rotor et dudit stator est réalisé en une seule pièce ;
- le rotor est disposé autour du stator et l'élément de support dudit rotor et dudit stator constitue une seule pièce comprenant,
   - une platine faisant office de radiateur,
   - un cylindre doté d'un canal interne faisant office d'élément de support du rotor et du stator.
- la deuxième partie du moyen de fixation, par exemple lesdits plots, est agencée sur une extrémité du cylindre du support dudit rotor et dudit stator ;
- le support dudit rotor et dudit stator est connecté électriquement à une masse électrique ;
- le support dudit rotor et dudit stator et/ou le capot de blindage sont réalisés en un matériau électriquement conducteur ;
- le capot de blindage comprend des échancrures aptes à laisser passer l'air chaud généré par le moteur et/ou le stator ;
- le capot de blindage comprend des pattes repliées pour prendre appui sur un élément du stator ;

### Brève description des figures

D'autres caractéristiques et avantages de l'invention ressortiront à la lecture de la description qui suit, en référence aux figures annexées, avec :
- La figure 1 illustre une vue schématique d'un moteur électrique selon l'invention ;
- La figure 2 illustre un capot de blindage selon l'invention ;
- La figure 3 illustre une vue partielle du support dudit rotor et dudit stator selon l'invention ;
- La figure 4 illustre une vue partielle du moteur électrique selon l'invention une fois le capot de blindage fixé sur le support dudit rotor et dudit stator ;
- La figure 5 illustre une vue schématique du moteur électrique selon un autre mode de réalisation ;
- La figure 6 illustre le support dudit rotor et dudit stator selon le mode de réalisation illustré à la figure 5.

### Description détaillée des modes de réalisation

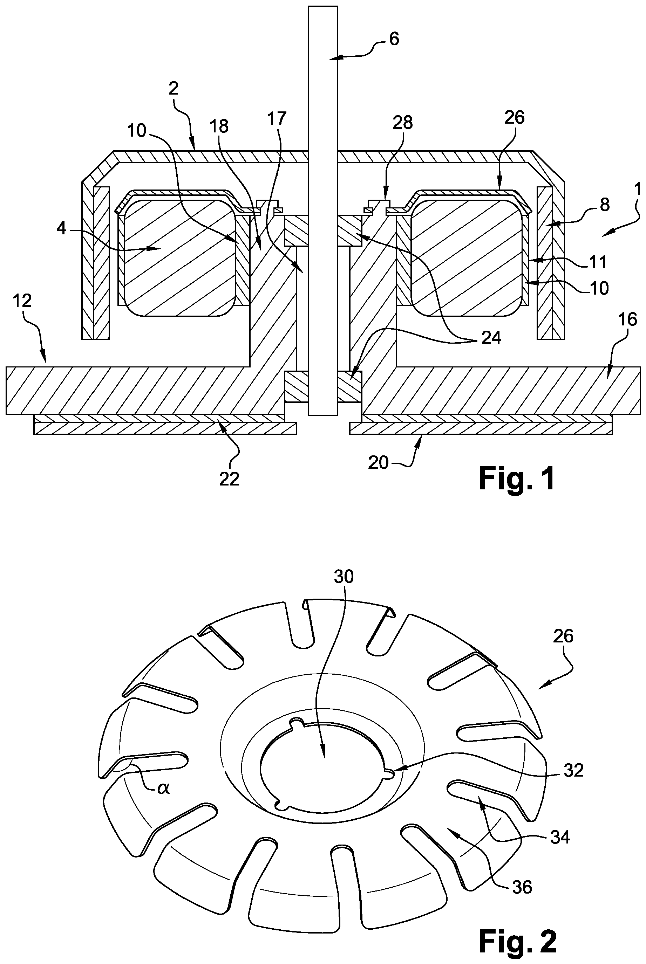

La figure 1 illustre un schéma d'un moteur électrique selon l'invention selon une vue en coupe. Le moteur électrique 1 comprend un rotor 2 et un stator 4. Le stator 4 présente une forme sensiblement annulaire avec une paroi centrale délimitant le contour d'un alésage interne par lequel passe un arbre de transmission 6 qui sera décrit ultérieurement. Le stator 4 comporte en outre une ou plusieurs bobines magnétiques génératrices d'un champ électromagnétique ainsi que des plaques métalliques 10 qui s'étendent sensiblement parallèlement à l'axe de l'arbre de transmission 6. Chaque plaque métallique 10 est agencée de manière à ce qu'une zone de passage pour l'enroulement de la bobine soit formée entre deux plaques métalliques 10 voisines. Une couche plastique électriquement isolante 11 peut également être ajoutée sur les plaques métalliques 10 afin d'isoler les plaques métalliques des bobines ou d'un aimant 8 qui sera décrit ultérieurement.

Le rotor 2, agencé autour du stator 4, est porteur d'au moins un aimant 8 permanent dont l'interaction, avec lesdites bobines alimentées en courant, génère un mouvement de rotation du rotor 2 autour du stator 4. Le rotor 2 est solidaire à l'arbre de transmission 6 de sorte que lorsque le rotor 2 pivote, l'arbre de transmission est également entrainé en rotation. L'arbre de transmission 6 est relié à une pale ou à une pluralité de pales agencées dans une roue, toutes non illustrées, permettant ainsi de générer un flux d'air lorsque l'arbre de transmission 6, et donc les pâles, sont entrainés en rotation. L'arbre de transmission 6 pénètre au sein de l'alésage interne dessiné par la forme annulaire du stator 4.

Afin que l'arbre de transmission 6, ainsi que le rotor 2 et le stator 4, restent dans une position stable, en d'autres termes que ces deux éléments ne se déplacent que de manière radiale et non axiale, ces trois éléments reposent sur un support 12 dudit rotor et dudit stator. Ledit support 12 présente la forme d'une platine 16 assujettie à un cylindre 18 disposé en saillie de la platine et présentant un canal interne 17 débouchant sensiblement au centre de la platine 16.

La platine 16 s'étend dans un plan sensiblement perpendiculaire à l'axe du canal interne 17 du cylindre 18. Le cylindre 18 est apte à être logé dans l'alésage interne du stator 4 et à recevoir l'arbre de transmission 6 solidaire du rotor 2, de sorte que le support 12 dudit rotor et dudit stator assure le positionnement correct du rotor 2 par rapport au stator 4.

On peut observer sur les figures 1, 5 et 6 que le cylindre 18 et la platine 16 forment une pièce monobloc. La platine 16 présente par exemple une forme discoïdale mais elle peut prendre d'autres formes, par exemple rectangulaire, carrée, elliptique, etc. La platine 16 du support 12 dudit rotor et dudit stator forme un radiateur porteur d'une carte électronique de commande 20 de l'alimentation des bobines du stator 4. La carte électronique de commande 20 est disposée sur la face de la platine 16 orientée à l'opposé du cylindre 18. Une couche 22 électriquement isolante, mais thermiquement conductrice, peut être agencée entre la carte électronique de commande 20 et le support 12 dudit rotor et dudit stator.

De façon préférentielle, le support 12 dudit rotor et dudit stator est en métal, plus particulièrement, en aluminium pour ses propriétés de légèreté et de bonne conduction thermique. Ainsi, la platine 16 faisant office de radiateur peut refroidir efficacement la carte électronique de commande 20 par conduction thermique. De plus, le fait que le support 12 dudit rotor et dudit stator soit réalisé en métal permet de bloquer des rayonnements électromagnétiques émis par l'organe électronique, ces rayonnements pouvant perturber le fonctionnement d'autres composants électriques. Le support 12 dudit rotor et dudit stator est connecté électriquement à une masse électrique, ou par exemple à un potentiel sensiblement nul. Plus spécifiquement, le support 12 dudit rotor et dudit stator est fixé à un élément de structure du véhicule, tel que le châssis, de sorte que ledit support 12 est considéré comme relié électriquement à la terre. En outre, le fait que le support 12 dudit rotor et dudit stator soit en métal permet de relier électriquement le stator 4 à la masse par l'intermédiaire dudit support 12.

Deux roulements 24 sont insérés dans le canal interne 17 du cylindre 18 pour servir de guide de rotation à l'arbre de transmission 6 qui est entraîné en rotation par le rotor 2. Ces roulements peuvent être des roulements à billes, tel qu'illustré schématiquement, mais l'invention couvre également d'autres formes de roulement telles que des roulements à rouleaux ou à aiguilles. Les deux roulements 24 prennent appui sur deux épaulements situés dans le canal interne 17 du cylindre 18 de manière à retenir axialement l'arbre de transmission dans une position fixe.

Le fonctionnement du moteur électrique, en particulier le stator 4, génère des ondes électromagnétiques qui peuvent perturber le fonctionnement d'autres appareils électroniques disposés à proximité. C'est pourquoi un capot de blindage 26 est agencé à proximité du stator 4 de manière à limiter la propagation de ces ondes. Le capot de blindage 26 correspond à une tôle de métal emboutie.

Selon l'invention, le capot de blindage 26 est avantageusement assujetti au plus proche du rotor 4 de manière à réduire ces phénomènes de propagation. Pour cela, le capot de blindage 26, tel qu'illustré à la figure 1, présente une forme sensiblement concave épousant la forme du stator 4. Afin de retenir au mieux les ondes électromagnétiques, le capot de blindage présente également une forme sensiblement annulaire d'un diamètre équivalent à celui du stator 4.

Comme on peut l'observer sur la figure 1, le capot de blindage 26 est fixé à une extrémité, plus particulièrement l'extrémité située en centre de la forme annulaire, au support 12 dudit rotor et dudit stator par un moyen de fixation 28. L'autre extrémité, située vers à l'opposée du centre, prend appui sur le stator 4, notamment sur les plaques métalliques 10 ou sur la couche plastique électriquement isolante 11.

La figure 2 illustre une vue agrandie du capot de blindage 26. Le capot de blindage 26, comme vu précédemment, correspond à une feuille de métal emboutie et présentant une forme annulaire. La partie centrale du capot de blindage 26 comprend un orifice 30 pour permettre le passage de l'arbre de transmission non illustré, et au moins une, ici trois, ouverture 32 pour permettre le passage du moyen de fixation 28 qui sera décrit ultérieurement. Les ouvertures 32 correspondent ici à des encoches de forme arrondie réalisées dans le capot de blindage 26, au niveau de l'orifice 30. Bien sûr, l'invention ne se limite pas au nombre d'ouvertures, ni à leur forme, réalisées dans le capot de blindage 26. Nous pourrions envisager par exemple d'exploiter un capot de blindage 26 présentant quatre évidements de forme carrée. Telles qu'illustrées sur la figure 2, les ouvertures 32 sont agencées en bordure, ou sur la périphérie interne, du capot de blindage 26. Bien évidemment, l'invention couvre également, selon un mode de réalisation non illustré, que ces ouvertures 32 soient disposées à distance de la périphérie interne.

Le capot de blindage 26 présente des échancrures 34, ou des découpes, de manière à dessiner des pattes 36 isolées les unes des autres par ces échancrures 34. Les échancrures 34 permettent d'évacuer la chaleur générée par le stator 4. Les pattes 36 sont repliées en leur extrémité pour venir prendre appui sur les plaques métalliques 10 ou sur la couche plastique électriquement isolante 11 de manière à limiter les phénomènes de vibration du capot de blindage 26. Les pattes 36 sont repliées selon un angle a, ici obtus, de manière à ce que le capot de blindage 26 épouse également la forme en cloche du rotor 2 comme illustré sur la figure 1. En d'autres termes, chaque patte 36 présente une extrémité recourbée en direction du stator de manière à dessiner un angle α entre la partie centrale plane du capot de blindage 26 et l'extrémité recourbée. L'angle α est compris dans une gamme d'angles allant de 0 à 180° et plus particulièrement dans une gamme d'angles compris entre 100°et 160°

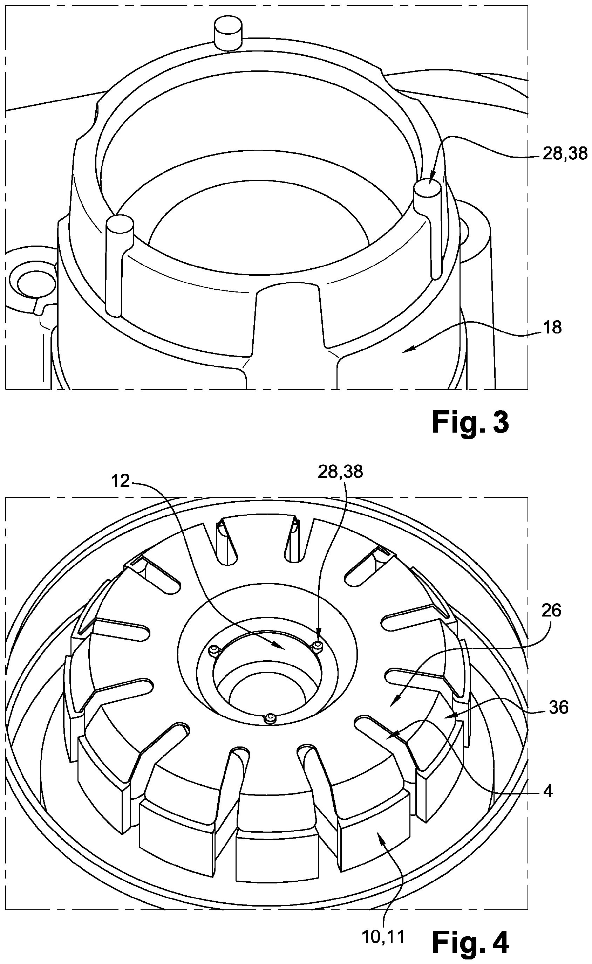

La figure 3 représente une vue agrandie de l'extrémité du cylindre 18 située à l'opposé de la platine 16. Le cylindre 18 présente au moins un moyen de fixation 28, plus spécifiquement un plot 38, ici au nombre de trois, sur sa partie extrémale située à l'opposé de la platine 16. Les plots 38 sont de forme complémentaire, ici arrondie, aux ouvertures 32 de manière à pouvoir passer au travers de celles-ci lorsque le capot de blindage 26 est introduit sur le support 12 dudit rotor et dudit stator. Suite à leur passage dans les ouvertures 32, les plots 38 sont ensuite déformés par sertissage, bouterollage, pressage ou tout autre procédé de déformation de manière à ce que le capot de blindage soit fixé de façon stable sur le support 12 dudit rotor et dudit stator. En effet, les plots 38, étant déformés, ne peuvent plus passer au travers des ouvertures 32 si bien que le capot de blindage 26 est fixé axialement et radialement sur le support 12 dudit rotor et dudit stator.

La figure 4 illustre une partie du moteur électrique selon l'invention suite à la déformation des plots 38. Il est visible que la forme du capot de blindage 26 épouse celle du stator 4 avec à une extrémité, les pattes 36 qui prennent appui sur les plaques métalliques 10 et/ou sur la couche plastique électriquement isolante 11 et à l'autre extrémité, la partie centrale du capot de blindage 26 qui est fixé sur le support 12 dudit rotor et dudit stator par l'intermédiaire des moyens de fixations 28. Le capot de blindage épouse également la forme du rotor 2 non représenté de manière à limiter l'encombrement et de réduire au maximum la taille du moteur électrique.

Selon un autre de mode de réalisation non illustré, il est possible de prévoir d'autres positionnements pour les moyens de fixation par exemple sur les plaques métalliques 10. L'invention ne se limite donc pas au positionnement des moyens de fixation. En effet, Il est également possible de prévoir un mode de réalisation, non illustré, où les plots sont agencés sur le capot de blindage et les ouvertures sont disposées sur le support dudit rotor et dudit stator. Nous pouvons prévoir dans ce cas un rebord saillant dudit support et comprenant des ouvertures de manière à accueillir les plots suivi d'une étape de boutrollage par exemple.

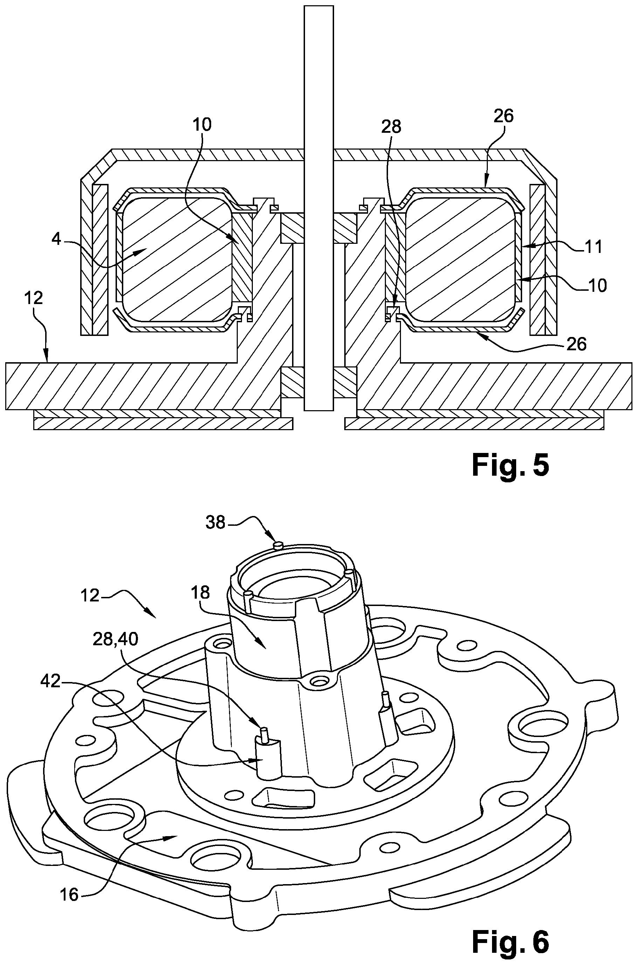

Afin de mieux contenir les ondes électromagnétiques, il est possible d'ajouter un deuxième capot de blindage 26 de l'autre versant du stator 4, comme illustré sur la figure 5. Le stator 4, étant contenu de part et d'autre entre deux capots de blindage 26, les ondes électromagnétiques se propageront ainsi moins. Le deuxième capot de blindage 26 correspond aussi à une feuille de métal emboutie ayant une même forme similaire au premier, à savoir une forme comme illustrée à la figure 2, toutefois à la différence que la périphérie interne de la partie centrale doit être découpée de manière à laisser passer une partie du cylindre 18 dudit support 12. Préférentiellement, le deuxième capot de blindage 26 épouse la forme du stator 4 de la même manière avec d'un côté, la partie centrale étant fixée au support 12 dudit rotor et dudit stator par l'intermédiaire de moyen de fixation 28 et de l'autre côté, la partie la plus éloignée radialement du centre, venant en appui sur les plaques métalliques 10 et/ou la couche plastique électriquement isolante 11.

La figure 6 illustre le support 12 dudit rotor et dudit stator selon l'invention dans le mode de réalisation avec deux capots de blindage (non illustrés). Le support 12 dudit rotor et dudit stator présente ici trois plots 38 sur la partie extrémale du cylindre 18, c'est-à-dire du côté opposé à la platine 16, pour la fixation du premier capot de blindage 26 comme décrit précédemment. Ledit support 12 comporte en outre des moyens de fixation 28 additionnels agencés sur une partie centrale du cylindre 18. Les moyens de fixation 28 additionnels correspondent ici également à des plots 40 destinés à passer au travers d'ouvertures agencées dans la partie centrale du deuxième capot de blindage non illustré. Le cylindre 18 comprend par exemple trois épaulements 42 agencés sur la partie centrale dudit cylindre. Les épaulements 42 correspondent à des parties saillantes du cylindre 18 ayant une face servant de surface d'appui sur lesquelles sont disposés les plots 40.

Suite à leur passage dans les ouvertures agencées dans le deuxième capot de blindage, les plots 40 sont alors déformés par bouterollage, sertissage, pressage ou tout autre procédé de déformation de manière à ce que le deuxième capot de blindage soit fixé de façon stable sur le support 12 dudit rotor et dudit stator. Les plots 40 étant déformés, ils ne peuvent plus passer au travers des ouvertures si bien que le deuxième capot de blindage est fixé axialement et radialement sur le support 12 dudit rotor et dudit stator.

Ainsi, les capots de blindage 26 sont agencés d'une part entre le stator 4 et le rotor 2 et d'autre part entre le stator 4 et le support 12 dudit rotor et dudit stator. Cela permet de mieux limiter la propagation des rayonnements électromagnétiques hors du moteur électrique.

Il doit être bien entendu toutefois que ces exemples de réalisation sont donnés à titre d'illustration de l'objet de l'invention. L'invention n'est pas limitée à ces modes de réalisation décrits précédemment et fournis uniquement à titre d'exemple. Elle englobe diverses modifications, formes alternatives et autres variantes que pourra envisager l'homme du métier dans le cadre des revendications annexées.

## Revendications

1. Moteur électrique (1) pour dispositif de pulsion d'air, comprenant un rotor (2) disposée autour d'un stator (4) et portant au moins un aimant (8) permanent, un support (12) dudit rotor et dudit stator apte à dissiper la chaleur,
le support (12) dudit rotor (2) et dudit stator (4) étant d'une seule pièce comprenant :
- une platine (16) faisant office de radiateur, la platine (16) formant un radiateur porteur d'une carte électronique de commande (20) de l'alimentation des bobines du stator (4),
- un cylindre (18) doté d'un canal interne (17) débouchant sensiblement au centre de la platine (16) et faisant office d'élément de support dudit rotor (2) et dudit stator (4),
**caractérisé en ce que** la carte électronique de commande (20) est disposée sur la face de la platine (16) orientée à l'opposé du cylindre (18),
le moteur électrique (1) comportant un capot de blindage (26) correspondant à une feuille de métal emboutie et présentant une forme annulaire, ledit capot de blindage (26) étant agencé entre ledit rotor (2) et ledit stator (4) et fixé au support (12) dudit rotor et dudit stator (4) par un moyen de fixation (28).

2. Moteur électrique selon la revendication 1, **caractérisé en ce que** le moyen de fixation (28) comprend une première partie (32) disposée sur le capot de blindage (26) et une deuxième partie (38) disposée sur le support (12).

3. Moteur selon la revendication 2, **caractérisé en ce que** les première et deuxième parties (32, 38) dudit moyen de fixation (28) sont intégrés respectivement dans ledit capot de blindage (26) et ledit support (12).

4. Moteur selon l'une des revendications 1 à 3, **caractérisé en ce que** le support (12) dudit rotor et dudit stator et le capot de blindage (26) sont reliés électriquement.

5. Moteur selon l'une des revendications 1 à 4, **caractérisé en ce que** le moyen de fixation (28) comprend au moins un plot (38) agencé sur le support (12) dudit rotor et dudit stator et au moins une ouverture (32), apte à accueillir ledit plot (38), agencée sur le capot de blindage (26).

6. Moteur selon la revendication 2, **caractérisé en ce que** la deuxième partie (38) du moyen de fixation (28) est agencée sur une extrémité du cylindre (18) du support (12) dudit rotor et dudit stator.

7. Moteur selon l'une des revendications 1 à 6, **caractérisé en ce que** le support (12) dudit rotor et dudit stator est connecté électriquement à une masse électrique.

8. Moteur selon l'une des revendications 1 à 7, **caractérisé en ce que** le support (12) dudit rotor et dudit stator et/ou le capot de blindage (26) sont réalisés en un matériau électriquement conducteur.

9. Moteur selon l'une des revendications 1 à 8, **caractérisé en ce que** le capot de blindage (26) comprend des échancrures (34) aptes à laisser passer l'air chaud généré par le moteur et/ou le stator.

10. Moteur selon l'une des revendications 1 à 9, **caractérisé en ce que** le capot de blindage (26) comprend des pattes (36) repliées pour prendre appui sur un élément du stator (4).

11. Moteur selon l'une des revendications 1 à 10, **caractérisé en ce que** le capot de blindage (26) est agencé entre le rotor (2) et le stator (4).

12. Dispositif de pulsion d'air **caractérisé en ce qu'**il comprend un moteur électrique (1) selon l'une des revendications 1 à 11.

## Patentansprüche

1. Elektromotor (1) für eine Gebläsevorrichtung, der einen Rotor (2), der um einen Stator (4) herum angeordnet ist und mindestens einen Dauermagneten (8) trägt, und einen Träger (12) des Rotors und des Stators enthält, der die Wärme ableiten kann, wobei der Träger (12) des Rotors (2) und des Stators (4) aus einem Stück ist, das enthält:
- eine als Kühler dienende Platte (16), wobei die Platte (16) einen eine elektronische Steuerkarte (20) der Versorgung der Spulen des Stators (4) tragenden Kühler bildet,
- einen Zylinder (18), der mit einem im Wesentlichen in der Mitte der Platte (16) mündenden inneren Kanal (17) versehen ist und als Trägerelement des Rotors (2) und des Stators (4) dient,
**dadurch gekennzeichnet, dass** die elektronische Steuerkarte (20) auf der entgegengesetzt zum Zylinder (18) ausgerichteten Seite der Platte (16) angeordnet ist,
wobei der Elektromotor (1) eine Abschirmhaube (26) aufweist, die einer tiefgezogenen Metallfolie entspricht und eine Ringform aufweist, wobei die Abschirmhaube (26) zwischen dem Rotor (2) und dem Stator (4) angeordnet und am Träger (12) des Rotors und des Stators (4) durch eine Befestigungseinrichtung (28) befestigt ist.

2. Elektromotor nach Anspruch 1, **dadurch gekennzeichnet, dass** die Befestigungseinrichtung (28) einen auf der Abschirmhaube (26) angeordneten ersten Teil (32) und einen auf dem Träger (12) angeordneten zweiten Teil (38) enthält.

3. Motor nach Anspruch 2, **dadurch gekennzeichnet, dass** die ersten und zweiten Teile (32, 38) der Befestigungseinrichtung (28) in die Abschirmhaube (26) bzw. den Träger (12) eingebaut sind.

4. Motor nach einem der Ansprüche 1 bis 3, **dadurch gekennzeichnet, dass** der Träger (12) des Rotors und des Stators und die Abschirmhaube (26) elektrisch verbunden sind.

5. Motor nach einem der Ansprüche 1 bis 4, **dadurch gekennzeichnet, dass** die Befestigungseinrichtung (28) mindestens ein auf dem Träger (12) des Rotors und des Stators angeordnetes Klötzchen (38) und mindestens eine auf der Abschirmhaube (26) angeordnete Öffnung (32) enthält, die das Klötzchen (38) aufnehmen kann.

6. Motor nach Anspruch 2, **dadurch gekennzeichnet, dass** der zweite Teil (38) der Befestigungseinrichtung (28) an einem Ende des Zylinders (18) des Trägers (12) des Rotors und des Stators eingerichtet ist.

7. Motor nach einem der Ansprüche 1 bis 6, **dadurch gekennzeichnet, dass** der Träger (12) des Rotors und des Stators elektrisch mit einer elektrischen Masse verbunden ist.

8. Motor nach einem der Ansprüche 1 bis 7, **dadurch gekennzeichnet, dass** der Träger (12) des Rotors und des Stators und/oder die Abschirmhaube (26) aus einem elektrisch leitenden Material hergestellt sind.

9. Motor nach einem der Ansprüche 1 bis 8, **dadurch gekennzeichnet, dass** die Abschirmhaube (26) Aussparungen (34) enthält, die die vom Motor und/oder vom Stator erzeugte heiße Luft durchlassen können.

10. Motor nach einem der Ansprüche 1 bis 9, **dadurch gekennzeichnet, dass** die Abschirmhaube (26) Klauen (36) enthält, die umgebogen sind, um sich auf ein Element des Stators (4) aufzulegen.

11. Motor nach einem der Ansprüche 1 bis 10, **dadurch gekennzeichnet, dass** die Abschirmhaube (26) zwischen dem Rotor (2) und dem Stator (4) angeordnet ist.

12. Gebläsevorrichtung, **dadurch gekennzeichnet, dass** sie einen Elektromotor (1) nach einem der Ansprüche 1 bis 11 enthält.

## Claims

1. Electric motor (1) for an air blowing device, comprising a rotor (2) placed around a stator (4) and carrying at least one permanent magnet (8), and a support (12) for said rotor and for said stator which is suitable for dissipating heat, the support (12) for said rotor (2) and for said stator (4) being made of a single piece comprising:
- a plate (16) used as a heat sink, the plate (16) forming a heat sink carrying a control electronic board (20) for the supply of power to the coils of the stator (4),
- a cylinder (18) supplied with an internal canal (17) opening substantially at the center of the plate (16) and used as a support element for said rotor (2) and for said stator (4),
**characterized in that** the control electronic board (20) is placed on the side of the plate (16) that is orientated away from the cylinder (18), the electric motor (1) including a shielding cap (26) corresponding to a stamped foil of metal and having an annular shape, said shielding cap (26) being arranged between said rotor (2) and said stator (4) and fixed to the support (12) for said rotor and for said stator (4) by a means for fixing (28) .

2. Electric motor according to Claim 1, **characterized in that** the mean for fixing (28) comprises a first part (32) placed on the shielding cap (26) and a second part (38) placed on the support (12).

3. Motor according to Claim 2, **characterized in that** the first and second parts (32, 38) of said means for fixing (28) are integrated in said shielding cap (26) and said support (12), respectively.

4. Motor according to one of Claims 1-3, **characterized in that** the support (12) for said rotor and for said stator and the shielding cap (26) are electrically linked.

5. Motor according to one of Claims 1-4, **characterized in that** the means for fixing (28) comprises at least one stud (38) arranged on the support (12) for said rotor and for said stator and at least one opening (32), suitable for accommodating said stud (38), which opening is arranged on the shielding cap (26).

6. Motor according to Claim 2, **characterized in that** the second part (38) of the means for fixing (28) is arranged on an end of the cylinder (18) of the support (12) for said rotor and for said stator.

7. Motor according to one of Claims 1-6, **characterized in that** the support (12) for said rotor and for said stator is electrically connected to an electrical ground.

8. Motor according to one of Claims 1-7, **characterized in that** the support (12) for said rotor and for said stator and/or the shielding cap (26) are produced from an electrically conductive material.

9. Motor according to one of Claims 1-8, **characterized in that** the shielding cap (26) comprises cut-outs (34) suitable for letting through the hot air generated by the motor and/or the stator.

10. Motor according to one of Claims 1-9, **characterized in that** the shielding cap (26) comprises tabs (36) that are folded to bear on an element of the stator (4) .

11. Motor according to one of Claims 1-10, **characterized in that** the shielding cap (26) is arranged between the rotor (2) and the stator (4).

12. Air blowing device **characterized in that** it comprises an electric motor (1) according to one of Claims 1-11.
